# EUROPEAN PATENT APPLICATION

(11) **EP 4 851 838 A1**
(43) Date of publication of application: **09.12.2026**
(21) Application number: 26179174.3
(22) Date of filing: 18.05.2026
(51) Int. Cl.: G06F 21/56, G06F 21/57

(54) **SOURCE CODE VULNERABILITY DETECTION**

(30) Priority: 04.06.2025 US 202519228081
(71) Applicant: Microsoft Technology Licensing, LLC, Redmond, WA 98052 (US)
(72) Inventor: MAGEE, Jamie Alexander, Redmond, Washington, 98052 (US)
(74) Representative: CMS Cameron McKenna Nabarro Olswang LLP

(57) **Abstract**

Detecting a vulnerable source code instance in a source code commit operation is provided. A hash of a source code instance included in the source code commit operation is obtained to store the source code instance in a remote source code repository. The hash is evaluated against hashes of known vulnerable source code instances, wherein the hashes of the known vulnerable source code instances are stored in a known source code instance hash datastore. It is determined whether the hash satisfies a vulnerable condition, wherein satisfaction of the vulnerable condition indicates that the source code instance is vulnerable. The source code instance corresponding to the hash is identified as the vulnerable source code instance responsive to determining that the hash of the source code instance satisfies the vulnerable condition.

## Description

### Background

It is not uncommon for a software developer often to manually copy files and/or folders from one or more source code repositories into their own software development project, particularly when a library is not available via a package manager for a specific repository, the developer wants to modify the source code for their project, and/or the developer wants to bundle dependencies for stability purposes. When the developer publishes their project in a repository, the developer can be said to "commit" their project to the repository, which can include, without limitation, version control, incremental saving of deltas, assignment of a unique identifier to the newly committed version of the project, and/or recording metadata about the project.

However, vulnerabilities in the copied source code may go undetected by the developer and, therefore, find their way into the developer's project. Accordingly, when the developer commits their project to a repository, the vulnerabilities can corrupt the developer's project and further be used by other developers who would introduce the same vulnerabilities into their own projects.

### Summary

In some aspects, the techniques described herein relate to a method of detecting a vulnerable source code instance in a source code commit operation, the method including: obtaining a hash of a source code instance included in the source code commit operation to store the source code instance in a remote source code repository; evaluating the hash against hashes of known vulnerable source code instances, wherein the hashes of the known vulnerable source code instances are stored in a known source code instance hash datastore; determining whether the hash satisfies a vulnerable condition, wherein satisfaction of the vulnerable condition indicates that the source code instance is vulnerable; and identifying the source code instance corresponding to the hash as the vulnerable source code instance responsive to determining that the hash of the source code instance satisfies the vulnerable condition.

In some aspects, the techniques described herein relate to a computing system for detecting a vulnerable source code instance in a source code commit operation, the computing system including: a hardware processor; memory; a vulnerability scanner storable in memory, executable by the hardware processor, and configured to obtain a hash of a source code instance included in the source code commit operation to store the source code instance in a remote source code repository, evaluate the hash against hashes of known vulnerable source code instances, wherein the hashes of the known vulnerable source code instances are stored in a known source code instance hash datastore, determine whether the hash satisfies a vulnerable condition, wherein satisfaction of the vulnerable condition indicates that the source code instance is vulnerable, and identify the source code instance corresponding to the hash as the vulnerable source code instance responsive to determining that the hash of the source code instance satisfies the vulnerable condition; and a commit utility storable in memory, executable by the hardware processor, and configured to process the source code instance based on whether the source code instance has been identified as the vulnerable source code instance.

In some aspects, the techniques described herein relate to one or more tangible processor-readable storage media embodied with instructions for executing on one or more processors and circuits of a computing system a process for detecting a vulnerable source code instance in a source code commit operation, the process including: computing a hash of a source code instance included in the source code commit operation to store the source code instance in a remote source code repository; evaluating the hash against hashes of known vulnerable source code instances, wherein the hashes of the known vulnerable source code instances are stored in a known source code instance hash datastore; determining whether the hash satisfies a vulnerable condition, wherein satisfaction of the vulnerable condition indicates that the source code instance is vulnerable; and identifying the source code instance corresponding to the hash as the vulnerable source code instance responsive to determining that the hash of the source code instance satisfies the vulnerable condition.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

### Brief Descriptions of the Drawings

FIG. 1 illustrates an example system for detecting vulnerabilities in source code instances.
FIG. 2 illustrates an example system for recording vulnerabilities in a vulnerability hash database.
FIG. 3 illustrates example operations for detecting a vulnerable source code instance in a source code commit operation.
FIG. 4 illustrates an example computing system for use in implementing the described technology.

### Detailed Descriptions

Generally, the term "commit" in the context of software development refers to an act of recording (e.g., into a repository) a snapshot of files or changes made to a set of files in a version-controlled project, such as a software development project. The commit operation captures the current state of the files (e.g., source code files, components of files, assets, configuration files), often along with metadata, such as the author, timestamp, and a message describing the changes. Commits are used to track the evolution of a project over time, enabling collaboration, rollback, and auditing of changes. In Git environments, a commit is first made locally and can later be pushed to a remote repository like GitHub to share with others or trigger automated workflows.

However, the software implementing a commit operation for a repository is generally unable to detect certain vulnerabilities in source code files that are copied from other projects into a developer's software project and, eventually, to the repository. For example, such software does not provide evaluation of the copied and/or modified source code at commit time. Moreover, while some whole source code files are copied into a software project, often only subsections (source code components) are copied into the software project, further complicating any ability to detect vulnerabilities. As such, vulnerabilities can propagate from project to project through manual (or partially manual) copying and/or modifying source code from other source code files.

The term "vendored code" refers to third-party source code that is, at least in part, manually copied or included directly into a software project's repository rather than being strictly referenced through a package manager (like npm, pip, or Maven). Developers often use vendored code to ensure stability, avoid external dependencies, or modify the copied code to suit their needs. However, this practice can introduce security risks because vendored code may not receive automatic updates or vulnerability alerts, and traditional security tools often overlook it. In the context of the invention, vendored code is a key concern because it can silently introduce known vulnerabilities into a project if not properly scanned during the commit process.

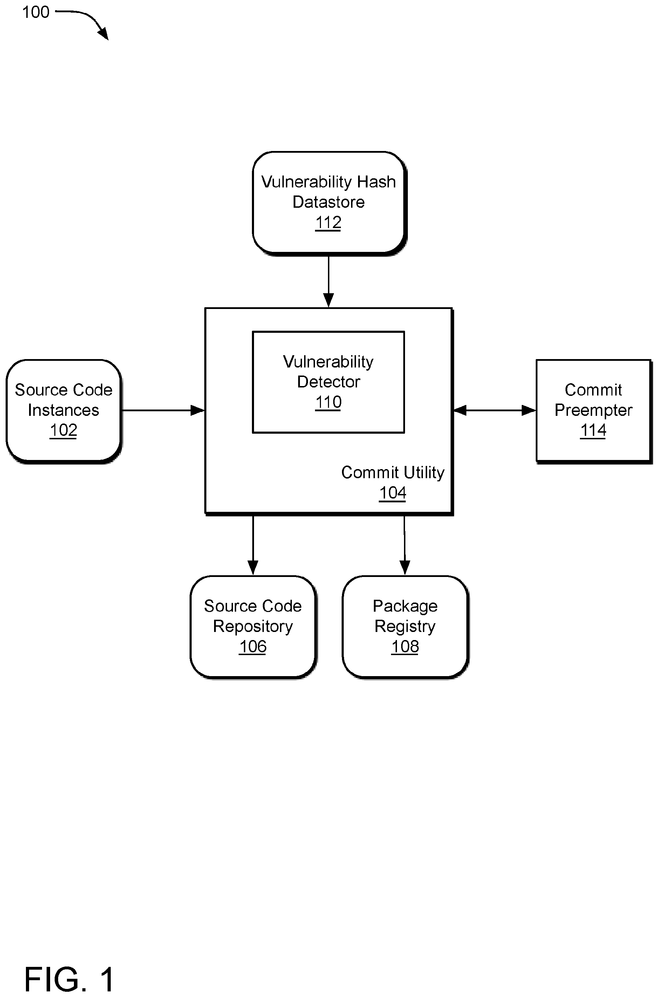

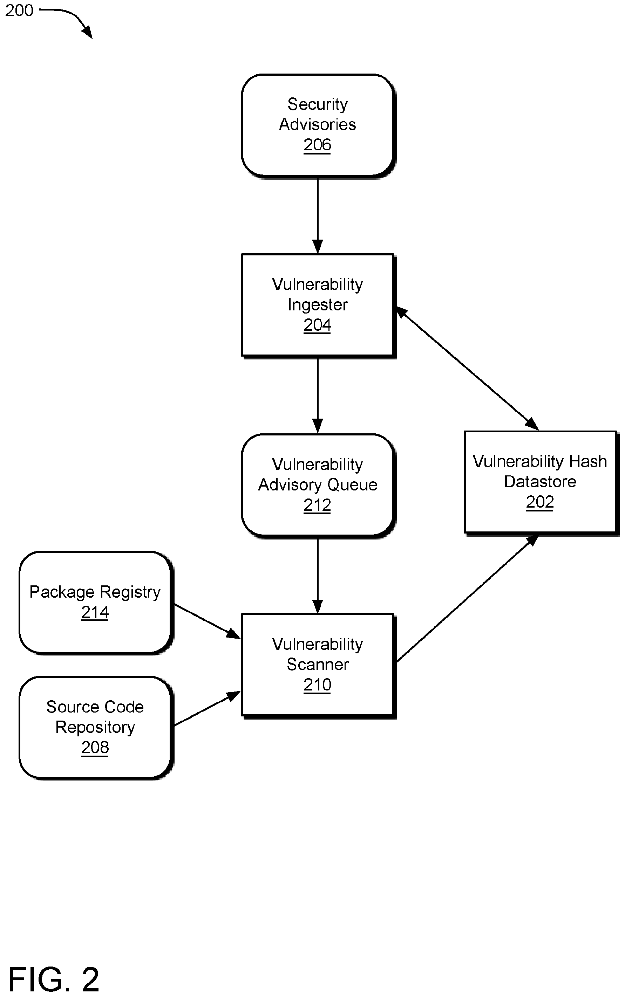

The described technology provides systems and methods for detecting security vulnerabilities in vendored source code files at the time of a commit operation to a repository. In some cases, an entire library of source code files may be committed to a repository, during which a vulnerable library, file, or component can be detected and flagged. Collectively, source code libraries, files, and components are referred to as "source code instances." A component represents a proper subset of a source code file, such as a function, a data structure, and/or another scope of the source code file that is less than the complete source code file. In one or more implementations, the types of components supported by the described technology are agreed to ahead of time so that the same types of components are supported by a vulnerability scanner and a vulnerability detector. See, e.g., FIGs. 1 and 2.

The described technology analyzes the source code instances being committed-whether newly written or copied from external sources-and compares their cryptographic hashes to a database of known vulnerable instance hashes. If a match is found, the commit can be blocked or flagged, preventing vulnerable code from entering the repository. The described technology also supports component-level hashing, allowing it to detect vulnerabilities even in partially modified files. Example components may include functions, methods, subroutines, data structures, and other defined subsets of a source code file. This approach addresses shortcomings in existing tools, which typically fail to identify vulnerabilities in vendored source code (e.g., manually copied or otherwise reproduced).

FIG. 1 illustrates an example system 100 for detecting vulnerabilities in source code instances 102. In the illustrated scenario, a developer has created the source code instances 102, possibly in a variety of approaches. In some instances, the developer has authored the source code themselves. In other instances, the developer may have copied source code from other source code files taken from a source code repository, such as Azure Repos, GitHub, GitLab, BitBucket, SourceForge, Apache Allura, CodeCommit, Cloud Source Repositories, and Launchpad, and pasted the source code into the source code instances 102. In yet other scenarios, the developer has copied and modified the source code from other source code instances taken from a source code repository and incorporated the modified source code into the source code instances 102. Any source code instance may include one or more instances of these three types of source code.

When the developer is ready to commit a version of a software project to a source code repository, the developer stages the source code instances 102 of the software project by performing one or more operations in the following sequence:
1. identifying to a commit utility 104 a local repository from which the source code instances 102 may be accessed;
2. identifying to the commit utility 104 a remote repository (e.g., source code repository 106) to which the source code instances 102 may be stored;
3. identifying the source code instances 102 to the commit utility 104;
4. executing the commit operation via the commit utility 104, which stores the source code instances 102 (and/or snapshots or deltas thereof) and corresponding management data in the remote repository (e.g., source code repository 106) and/or associated storage (e.g., a package registry 108).

However, this commit process, without more, does not detect vulnerabilities in the vendored source code at commit time. As such, some implementations of the described technology add additional operations to the commit process to detect vulnerabilities in the source code instances 102 and then, in response to the detection of the vulnerability, terminate or interrupt the commit process and/or alert a user to a potential vulnerability. When the commit utility 104 receives the source code instances 102 in the commit operation, a vulnerability detector 110 generates hashes of the entire library of the source code instances 102, of one or more individual files of the source code instances 102, and/or of one or more individual components of the source code instances 102. The vulnerability detector 110 then compares these hashes to hashes in a vulnerability hash datastore 112 to determine whether the hash of any of the source code instances 102 matches a hash in the vulnerability hash datastore 112. A match indicates that the corresponding source code instance has been previously identified as containing a vulnerability (e.g., by a security advisory).

Generally, a hash is a fixed-length string of characters generated by a cryptographic function (like SHA-1 or SHA-256) that uniquely represents the contents of a library, file, or component of a file. Even a tiny change in a source code instance will produce a completely different hash. Hashes can be used to uniquely identify source code instances and track changes across commits.

If the vulnerability detector 110 detects a match between a hash from the vulnerability hash datastore 112 and a hash from one or more of the source code instances 102, the commit utility 104 determines that a vulnerability has been detected in the source code instances 102. In this condition, the commit utility 104 notifies a commit preempter 114, which can terminate the commit operation before the source code instances 102 are saved to the package registry 108. Other responses of the commit preempter 114 may include, without limitation, alerting the developer of a potential vulnerability, allowing the developer to force completion of the commit operation, suggesting non-vulnerable versions of the identified source code instance(s) that the developer may use to replace the vulnerable instance(s).

If the vulnerability detector 110 does not detect a match between a hash from the vulnerability hash datastore 112 and a hash from one or more of the source code instances 102, the commit utility 104 determines that no vulnerability has been detected in the source code instances 102. In this condition, package registration information for the committed source code instances and their corresponding hashes is recorded in the package registry 108, and the committed source code instances themselves are recorded in the source code repository 106. A package typically refers to a reusable collection of code (such as a library, one or more source code files, or one or more source components, collectively referred to as "source code instances") that can be distributed and reused across projects, typically including one or more of the following: compiled code or scripts, metadata (name, version, dependencies), and documentation. In some implementations, the package registry (e.g., npm, NuGet, Maven) can store package metadata, such as the location of the committed source code instances (e.g., in the source code repository), package name, version, author, license, dependencies, etc.; compiled artifacts in distributed formats (e.g., prebuilt binaries or bundled files in .dll, jar, .tgz, and/or .whl format); and version tracking information for a package and/or source code instances. Accordingly, the source code repository 106 stores the source code instances themselves and their corresponding hashes, while the package registry 108 stores description information about those source code files.

FIG. 2 illustrates an example system 200 for recording vulnerabilities in a vulnerability hash database 202. A vulnerability ingester 204 receives security advisories 206 providing pointers, identifications, and/or descriptions of discovered or known vulnerabilities in a source code repository 208 from which a developer may copy source code libraries, files, and/or components. In one implementation, for example, each security advisory points to a record in a package registry 214 that contains metadata providing the source code location in the source code repository 208 for the corresponding vulnerable source code instance. A vulnerability scanner 210 receives vulnerability advisories from a vulnerability advisory queue 212 into which the vulnerability ingester 204 has input selected vulnerability advisories and computes and records a hash of the source code instances corresponding to each vulnerability advisory from a vulnerability advisory queue 212 along with other metadata about the source code instances identified in the vulnerability hash database 202.

Security advisories may be received from multiple sources in multiple formats. For example, GitHub Security Advisories follow a structured format designed to clearly communicate vulnerability details to developers and security tools. Security advisories may be published periodically, in real-time as they are submitted and/or approved by a security organization, and/or on other time schedules.

An overview of a standard format used in GitHub Security Advisories is provided in GitHub's official documentation (see, e.g., the Security Advisories section of the GitHub Secure Coding Documentation, published by GitHub, Inc. in 2025), potentially including some example metadata fields described below:
1. Ecosystem - Specifies the package ecosystem (e.g., 'npm', 'pip', 'maven', 'nuget', etc.).
2. Package Name - The name of the affected package.
3. Vulnerable Versions - A list or range of versions that are affected by the vulnerability.
4. Patched Versions - The version(s) in which the vulnerability has been fixed.
5. Severity - A CVSS (Common Vulnerability Scoring System) score or qualitative rating (e.g., 'low', 'moderate', 'high', 'critical').
6. CVE Identifier - A unique identifier from the Common Vulnerabilities and Exposures system.
7. Summary - A brief description of the vulnerability.
8. Details - A more in-depth explanation of the vulnerability, including how it can be exploited and its impact.
9. References - Links to external resources, such as pull requests, commits, or issue trackers.
10. Credits - Acknowledgment of the individuals or organizations that reported the vulnerability.

Other fields and formats may be used by other security advisory sources.

The vulnerability ingester 204 receives a list of one or more security vulnerability advisories. In some cases, the vulnerability ingester 204 receives a list of only new security vulnerability advisories and does not need to filter out vulnerability advisories that have already been processed by the vulnerability scanner 210.

In other implementations, the vulnerability ingester 204 filters out vulnerability advisories that have already been processed by the vulnerability scanner 210 by comparing the vulnerabilities from the security advisories 206 to those already stored in the vulnerability hash database 202. In some implementations of this case, the vulnerability ingester 204 compares some of the metadata from the received security advisories (e.g., the affected package name, version range, and CVE identifier) to corresponding metadata in the vulnerability hash database 202. If the vulnerability ingester 204 finds a match, then the vulnerability advisory is not new and has already been recorded in the vulnerability hash database 202. Otherwise, the vulnerability advisory is deemed a new vulnerability advisory and is added to the vulnerability advisory queue 212. In some implementations, the vulnerability scanner 210 could simply scan all received security advisories, whether new or not, although this approach is much less efficient than other approaches.

The vulnerability scanner 210 extracts a vulnerability advisory from the vulnerability advisory queue 212 and uses the metadata in the vulnerability advisory to look up the corresponding source code instance(s) in the package registry 214, which identifies the corresponding source code instances in the source code repository 208. The vulnerability scanner 210 then generates a hash for each of the corresponding source code instances in the source code repository 208 and records the hash(es) and metadata corresponding to these vulnerable source code instances into the vulnerability hash database 202. Thereafter, a vulnerability detector (e.g., see vulnerability detector 110 in FIG. 1) can compare the hash of the source code instances submitted in a commit operation to the hashes of the vulnerable source code instances in the vulnerability hash database 202 to determine if the commit operation includes vulnerable source code instances.

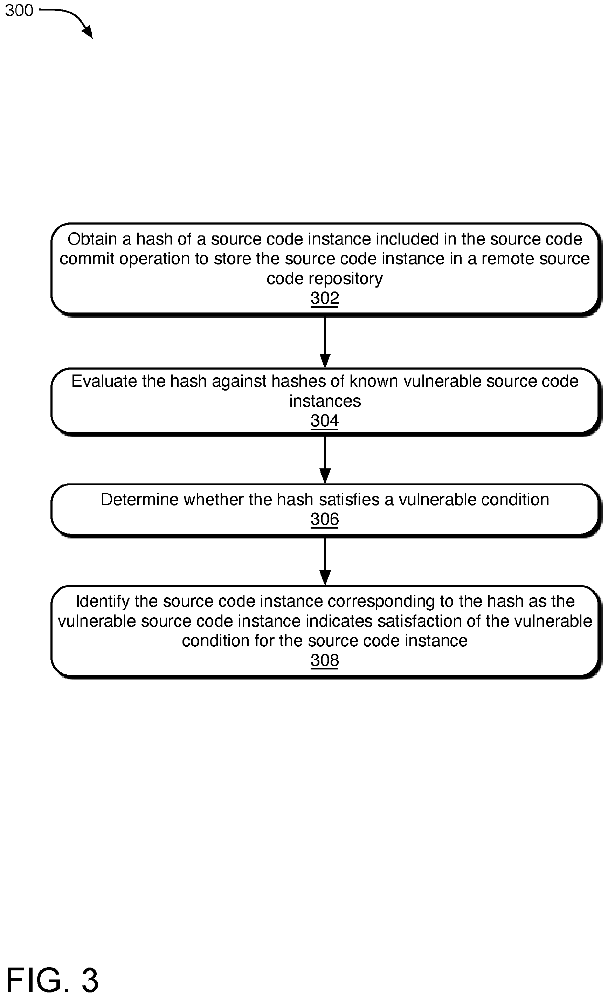

FIG. 3 illustrates example operations 300 for detecting a vulnerable source code instance in a source code commit operation. A receiving operation 302 obtains a hash of a source code instance included in the source code commit operation to store the source code instance in a remote source code repository. In some implementations, the hash of the source code instance is obtained by computing a cryptographic hash function to content of the source code instance, whether by a commit utility and a vulnerability detector or by receiving the hash computed by a different computing system. In some implementations, the source code instance includes a proper subset of a complete source code file, and the hash is obtained by applying a cryptographic hash function to the content of the proper subset (less than the entire file) of a complete source code file.

An evaluation operation 304 evaluates the hash against hashes of known vulnerable source code instances. The hashes of the known vulnerable source code instances are stored in a known source code instance hash datastore, such as a vulnerability hash database.

A determination operation 306 determines whether the hash satisfies a vulnerable condition, wherein satisfaction of the vulnerable condition indicates that the source code instance is vulnerable. In some implementations, the vulnerable condition is satisfied if the hash of the source code instance matches a hash of a hash of a known vulnerable source code instance in the known source code instance hash datastore. An identification operation 308 identifies the source code instance corresponding to the hash as the vulnerable source code instance responsive to determining that the hash of the source code instance satisfies the vulnerable condition.

In some implementations, the vulnerability condition requires an exact match between the hash of the source code instance and a hash of a known vulnerable source code instance in the known source code instance hash datastore. In other implementations, the vulnerability condition may be satisfied without an exact match between the hashes. In a non-exact match situation, assume the developer has copied a source code file from a source code library and then changed one component out of ten components in that source code file (e.g., to fix a bug or add an additional feature). The source code file hash will no longer match exactly. However, the system can still ascertain a probability that the modified source code file is based on a known source code file with a known vulnerability.

In one implementation, for example, the vulnerability scanner decomposes each source code file into component parts and calculates hashes for each of those component parts (e.g., functions, data structures, objects). The vulnerability scanner can then store these component hashes in the vulnerability hash datastore in combination with a link between the component hashes and the source code file hash. This link (e.g., one or more pointers, a linking data structure) maintains a reference between component hashes, file hash, and vulnerability to reference.

In this implementation, the vulnerability detector also breaks down each source file into component parts, calculates hashes for each, and then compares the component hashes with those stored in the vulnerability hash datastore. So, even if the developer has modified only a single component in a source code file, other component hashes of the source code file will match component hashes from the vulnerability hash datastore. Based on these matches and referencing the component hash to a file hash to a vulnerability link, the vulnerability detector gives a probabilistic answer that these components are part of a known source code file with a known vulnerability.

In some implementations, the method may include storing the source code instance in the remote source code file repository, responsive to the hash not satisfying the vulnerable condition, and/or interrupting the source code commit operation to prevent the storage of the source code instance in the remote source code file repository, responsive to the hash satisfying the vulnerable condition. In other operations, the method may include issuing an alert that the source code instance contains a vulnerability, responsive to the hash satisfying the vulnerable condition.

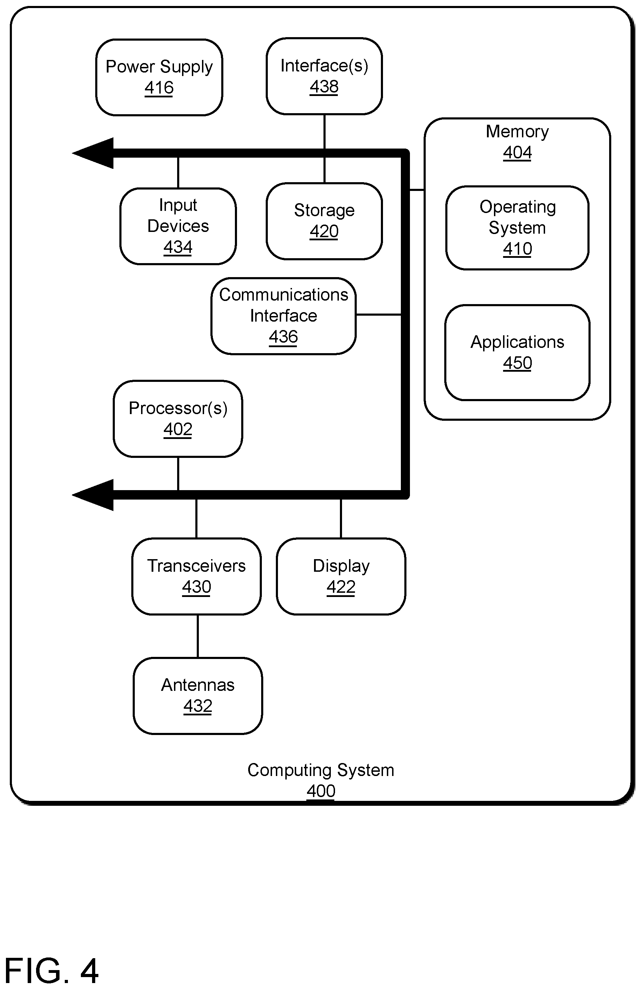

FIG. 4 illustrates an example computing system 400 for use in implementing the described technology. The computing system 400 may be a client computing device (such as a laptop computer, a desktop computer, or a tablet computer), a server/cloud computing device, an Internet-of-Things (IoT), any other type of computing device, or a combination of these options. The computing system 400 includes a hardware processor 402 and a memory 404. The memory 404 generally includes both volatile memory (e.g., RAM) and nonvolatile memory (e.g., flash memory), although one or the other type of memory may be omitted. An operating system 410 resides in the memory 404 and is executed by the hardware processor 402. In some implementations, the computing system 400 includes and/or is communicatively coupled to storage 420. The hardware processor 402 may also be distributed across multiple computing devices in some implementations.

In the example computing system 400, as shown in FIG. 4, one or more software modules, segments, and/or processors, such as applications 450, a commit utility, a vulnerability detector, a vulnerability ingester, a vulnerability scanner, and other program code and modules are loaded into the operating system 410 on the memory 404 and/or the storage 420 and executed by the hardware processor 402 in a single computing device or across multiple computing devices. The storage 420 may store source code instances, hashes, metadata, vulnerability hash data (e.g., in a vulnerability hash datastore), package registration data (e.g., in a package registry), security advisories, and other data and be local to the computing system 400 or may be remote and communicatively connected to the computing system 400. In particular, in one implementation, components of a system for detecting a vulnerable source code instance in a source code commit operation may be implemented entirely in hardware or in a combination of hardware circuitry and software and/or by a hardware processor.

The computing system 400 includes a power supply 416, which may include or be connected to one or more batteries or other power sources, and which provides power to other components of the computing system 400. The power supply 416 may also be connected to an external power source that overrides or recharges the built-in batteries or other power sources.

The computing system 400 may include one or more communication transceivers 430, which may be connected to one or more antenna(s) 432 to provide network connectivity (e.g., mobile phone network, Wi-Fi^{®}, Bluetooth^{®}) to one or more other servers, client devices, IoT devices, and other computing and communications devices. The computing system 400 may further include a communications interface 436 (such as a network adapter or an I/O port, which are types of communication devices). The computing system 400 may use the adapter and any other types of communication devices for establishing connections over a wide-area network (WAN) or local-area network (LAN). It should be appreciated that the network connections shown are exemplary and that other communications devices and means for establishing a communications link between the computing system 400 and other devices may be used.

The computing system 400 may include one or more input devices 434 such that a user may enter commands and information (e.g., a keyboard, trackpad, or mouse). These and other input devices may be coupled to the server by one or more interfaces 438, such as a serial port interface, parallel port, or universal serial bus (USB). The computing system 400 may further include a display 422, such as a touchscreen display.

The computing system 400 may include a variety of tangible processor-readable storage media and intangible processor-readable communication signals. Tangible processor-readable storage can be embodied by any available media that can be accessed by the computing system 400 and can include both volatile and nonvolatile storage media and removable and non-removable storage media. Tangible processor-readable storage media excludes intangible and transitory communications signals (such as signals per se) and includes volatile and nonvolatile, removable and non-removable storage media implemented in any method, process, or technology for storage of information such as processor-readable instructions, data structures, program modules, or other data. Tangible processor-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage, or other magnetic storage devices, or any other tangible medium which can be used to store the desired information and which can be accessed by the computing system 400. In contrast to tangible processor-readable storage media, intangible processor-readable communication signals may embody processor-readable instructions, data structures, program modules, or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals traveling through wired media such as a wired network or direct-wired connection, and wireless media such as acoustic, RF, infrared, and other wireless media.

Some implementations may comprise an article of manufacture, which excludes software per se. An article of manufacture may comprise a tangible storage medium to store logic and/or data. Examples of a storage medium may include one or more types of computer-readable storage media capable of storing electronic data, including volatile memory or nonvolatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described embodiments. The executable computer program instructions may include any suitable types of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled, and/or interpreted programming language.

As used herein, terms such as "a", "an", and "the" are inclusive of one or more of the indicated item or step. In particular, in the claims, a reference to an item generally means at least one such item is present and a reference to a step means at least one instance of the step is performed. Similarly, "is" and other singular verb forms should be understood to encompass the possibility of "are" and other plural forms, when context permits, to avoid grammatical errors or misunderstandings.

Clause 1. A method of detecting a vulnerable source code instance in a source code commit operation, the method comprising: obtaining a hash of a source code instance included in the source code commit operation to store the source code instance in a remote source code repository; evaluating the hash against hashes of known vulnerable source code instances, wherein the hashes of the known vulnerable source code instances are stored in a known source code instance hash datastore; determining whether the hash satisfies a vulnerable condition, wherein satisfaction of the vulnerable condition indicates that the source code instance is vulnerable; and identifying the source code instance corresponding to the hash as the vulnerable source code instance responsive to determining that the hash of the source code instance satisfies the vulnerable condition.

Clause 2. The method of clause 1, wherein the vulnerable condition is satisfied if the hash of the source code instance matches a hash of a known vulnerable source code instance in the known source code instance hash datastore.

Clause 3. The method of clause 1, wherein the hash of the source code instance is obtained by applying a cryptographic hash function to contents of the source code instance.

Clause 4. The method of clause 1, wherein the source code instance includes a proper subset of a complete source code file and the hash is obtained by applying a cryptographic hash function to contents of the proper subset of a complete source code file.

Clause 5. The method of clause 1, wherein the source code instance is stored in a source code file repository, responsive to the hash not satisfying the vulnerable condition.

Clause 6. The method of clause 1, further comprising: interrupting the source code commit operation to prevent storage of the source code instance in a source code file repository, responsive to the hash satisfying the vulnerable condition.

Clause 7. The method of clause 1, further comprising: issuing an alert that the source code instance contains a vulnerability, responsive to the hash satisfying the vulnerable condition.

Clause 8. A computing system for detecting a vulnerable source code instance in a source code commit operation, the computing system comprising: a hardware processor; memory; a vulnerability scanner storable in memory, executable by the hardware processor, and configured to obtain a hash of a source code instance included in the source code commit operation to store the source code instance in a remote source code repository, evaluate the hash against hashes of known vulnerable source code instances, wherein the hashes of the known vulnerable source code instances are stored in a known source code instance hash datastore, determine whether the hash satisfies a vulnerable condition, wherein satisfaction of the vulnerable condition indicates that the source code instance is vulnerable, and identify the source code instance corresponding to the hash as the vulnerable source code instance responsive to determining that the hash of the source code instance satisfies the vulnerable condition; and a commit utility storable in memory, executable by the hardware processor, and configured to process the source code instance based on whether the source code instance has been identified as the vulnerable source code instance.

Clause 9. The computing system of clause 8, wherein the vulnerable condition is satisfied if the hash of the source code instance matches a hash of a known vulnerable source code instance in the known source code instance hash datastore.

Clause 10. The computing system of clause 8, wherein the hash of the source code instance is obtained by applying a cryptographic hash function to contents of the source code instance.

Clause 11. The computing system of clause 8, wherein the source code instance includes a proper subset of a complete source code file and the hash is obtained by applying a cryptographic hash function to contents of the proper subset of a complete source code file.

Clause 12. The computing system of clause 8, wherein the source code instance is stored in a source code file repository, responsive to the hash not satisfying the vulnerable condition.

Clause 13. The computing system of clause 8, wherein the commit utility is further configured to interrupt the source code commit operation to prevent storage of the source code instance in a source code file repository, responsive to the hash satisfying the vulnerable condition.

Clause 14. The computing system of clause 8, wherein the commit utility is further configured to issue an alert that the source code instance contains a vulnerability, responsive to the hash satisfying the vulnerable condition.

Clause 15. One or more tangible processor-readable storage media embodied with instructions for executing on one or more processors and circuits of a computing system a process for detecting a vulnerable source code instance in a source code commit operation, the process comprising: computing a hash of a source code instance included in the source code commit operation to store the source code instance in a remote source code repository; evaluating the hash against hashes of known vulnerable source code instances, wherein the hashes of the known vulnerable source code instances are stored in a known source code instance hash datastore; determining whether the hash satisfies a vulnerable condition, wherein satisfaction of the vulnerable condition indicates that the source code instance is vulnerable; and identifying the source code instance corresponding to the hash as the vulnerable source code instance responsive to determining that the hash of the source code instance satisfies the vulnerable condition.

Clause 16. The one or more tangible processor-readable storage media of clause 15, wherein the vulnerable condition is satisfied if the hash of the source code instance matches a hash of a known vulnerable source code instance in the known source code instance hash datastore.

Clause 17. The one or more tangible processor-readable storage media of clause 15, wherein the source code instance includes a proper subset of a complete source code file and the hash is obtained by applying a cryptographic hash function to contents of the proper subset of a complete source code file.

Clause 18. The one or more tangible processor-readable storage media of clause 15, wherein the source code instance is stored in a source code file repository, responsive to the hash not satisfying the vulnerable condition.

Clause 19. The one or more tangible processor-readable storage media of clause 15, wherein the process further comprises: interrupting the source code commit operation to prevent storage of the source code instance in a source code file repository, responsive to the hash satisfying the vulnerable condition.

Clause 20. The one or more tangible processor-readable storage media of clause 15, wherein the process further comprises: issuing an alert that the source code instance contains a vulnerability, responsive to the hash satisfying the vulnerable condition.

Clause 21. A system of detecting a vulnerable source code instance in a source code commit operation, the system comprising: means for obtaining a hash of a source code instance included in the source code commit operation to store the source code instance in a remote source code repository; means for evaluating the hash against hashes of known vulnerable source code instances, wherein the hashes of the known vulnerable source code instances are stored in a known source code instance hash datastore; means for determining whether the hash satisfies a vulnerable condition, wherein satisfaction of the vulnerable condition indicates that the source code instance is vulnerable; and means for identifying the source code instance corresponding to the hash as the vulnerable source code instance responsive to determining that the hash of the source code instance satisfies the vulnerable condition.

Clause 22. The system of clause 21, wherein the vulnerable condition is satisfied if the hash of the source code instance matches a hash of a known vulnerable source code instance in the known source code instance hash datastore.

Clause 23. The system of clause 21, wherein the hash of the source code instance is obtained by applying a cryptographic hash function to contents of the source code instance.

Clause 24. The system of clause 21, wherein the source code instance includes a proper subset of a complete source code file and the hash is obtained by applying a cryptographic hash function to contents of the proper subset of a complete source code file.

Clause 25. The system of clause 21, wherein the source code instance is stored in a source code file repository, responsive to the hash not satisfying the vulnerable condition.

Clause 26. The system of clause 21, further comprising: means for interrupting the source code commit operation to prevent storage of the source code instance in a source code file repository, responsive to the hash satisfying the vulnerable condition.

Clause 27. The system of clause 21, further comprising: means for issuing an alert that the source code instance contains a vulnerability, responsive to the hash satisfying the vulnerable condition.

Detecting a vulnerable source code instance in a source code commit operation is provided. A hash of a source code instance included in the source code commit operation is obtained to store the source code instance in a remote source code repository. The hash is evaluated against hashes of known vulnerable source code instances, wherein the hashes of the known vulnerable source code instances are stored in a known source code instance hash datastore. It is determined whether the hash satisfies a vulnerable condition, wherein satisfaction of the vulnerable condition indicates that the source code instance is vulnerable. The source code instance corresponding to the hash is identified as the vulnerable source code instance responsive to determining that the hash of the source code instance satisfies the vulnerable condition.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

## Claims

1. A method (300) of detecting a vulnerable source code instance in a source code commit operation, the method (300) comprising:
obtaining (302) a hash of a source code instance included in the source code commit operation to store the source code instance in a remote source code repository (208, 106);
evaluating (304) the hash against hashes of known vulnerable source code instances (102), wherein the hashes of the known vulnerable source code instances (102) are stored in a known source code instance hash datastore;
determining (306) whether the hash satisfies a vulnerable condition, wherein satisfaction of the vulnerable condition indicates that the source code instance is vulnerable; and
identifying (308) the source code instance corresponding to the hash as the vulnerable source code instance responsive to determining that the hash of the source code instance satisfies the vulnerable condition.

2. The method of claim 1, wherein the vulnerable condition is satisfied if the hash of the source code instance matches a hash of a known vulnerable source code instance in the known source code instance hash datastore.

3. The method of claim 1 or 2, wherein the hash of the source code instance is obtained by applying a cryptographic hash function to contents of the source code instance.

4. The method of any preceding claim, wherein the source code instance includes a proper subset of a complete source code file and the hash is obtained by applying a cryptographic hash function to contents of the proper subset of a complete source code file.

5. The method of any preceding claim, wherein the source code instance is stored in a source code file repository, responsive to the hash not satisfying the vulnerable condition.

6. The method of any preceding claim, further comprising:
interrupting the source code commit operation to prevent storage of the source code instance in a source code file repository, responsive to the hash satisfying the vulnerable condition.

7. The method of any preceding claim, further comprising:
issuing an alert that the source code instance contains a vulnerability, responsive to the hash satisfying the vulnerable condition.

8. A computing system (100, 200, 400) for detecting a vulnerable source code instance in a source code commit operation, the computing system (100, 200, 400) comprising:
a hardware processor (402);
memory (404);
a vulnerability scanner (210) storable in memory (404), executable by the hardware processor (402), and configured to
obtain (302) a hash of a source code instance included in the source code commit operation to store the source code instance in a remote source code repository (208, 106),
evaluate (304) the hash against hashes of known vulnerable source code instances (102), wherein the hashes of the known vulnerable source code instances (102) are stored in a known source code instance hash datastore,
determine (306) whether the hash satisfies a vulnerable condition, wherein satisfaction of the vulnerable condition indicates that the source code instance is vulnerable, and
identify (308) the source code instance corresponding to the hash as the vulnerable source code instance responsive to determining that the hash of the source code instance satisfies the vulnerable condition; and
a commit utility (104) storable in memory (404), executable by the hardware processor (402), and configured to process the source code instance based on whether the source code instance has been identified as the vulnerable source code instance.

9. The computing system of claim 8, wherein the vulnerable condition is satisfied if the hash of the source code instance matches a hash of a known vulnerable source code instance in the known source code instance hash datastore.

10. The computing system of claim 8 or 9, wherein the hash of the source code instance is obtained by applying a cryptographic hash function to contents of the source code instance.

11. The computing system of any one of claims 8 to 10, wherein the source code instance includes a proper subset of a complete source code file and the hash is obtained by applying a cryptographic hash function to contents of the proper subset of a complete source code file.

12. The computing system of any one of claims 8 to 11, wherein the source code instance is stored in a source code file repository, responsive to the hash not satisfying the vulnerable condition.

13. The computing system of any one of claims 8 to 12, wherein the commit utility is further configured to interrupt the source code commit operation to prevent storage of the source code instance in a source code file repository, responsive to the hash satisfying the vulnerable condition.

14. The computing system of any one of claims 8 to 13, wherein the commit utility is further configured to issue an alert that the source code instance contains a vulnerability, responsive to the hash satisfying the vulnerable condition.

15. One or more tangible processor-readable storage (420) media embodied with instructions for executing on one or more processors and circuits of a computing system (100, 200, 400) a process (300) for detecting a vulnerable source code instance in a source code commit operation, the process (300) comprising:
computing (302) a hash of a source code instance included in the source code commit operation to store the source code instance in a remote source code repository (208, 106);
evaluating (304) the hash against hashes of known vulnerable source code instances (102), wherein the hashes of the known vulnerable source code instances (102) are stored in a known source code instance hash datastore;
determining (306) whether the hash satisfies a vulnerable condition, wherein satisfaction of the vulnerable condition indicates that the source code instance is vulnerable; and
identifying (308) the source code instance corresponding to the hash as the vulnerable source code instance responsive to determining that the hash of the source code instance satisfies the vulnerable condition.
